Europäisches Patentamt

European Patent Office

Office européen des brevets

(19)

(11) Numéro de publication: **0 255 412**
**B1**

(12) **FASCICULE DE BREVET EUROPEEN**

(45) Date de publication du fascicule du brevet: **22.08.90**

(51) Int. Cl.⁵: **B 60 G 17/02,** B 60 G 11/30

(21) Numéro de dépôt: **87401420.2**

(22) Date de dépôt: **23.06.87**

(54) Suspension hydropneumatique pour véhicule automobile.

(30) Priorité: **02.07.86 FR 8609938**

(43) Date de publication de la demande:
**03.02.88 Bulletin 88/05**

(45) Mention de la délivrance du brevet:
**22.08.90 Bulletin 90/34**

(84) Etats contractants désignés:
**DE GB IT**

(56) Documents cités:
**EP-A-0 176 390**
**FR-A-2 177 946**
**FR-A-2 441 504**

(73) Titulaire: **AUTOMOBILES PEUGEOT**
**75, avenue de la Grande Armée**
**F-75116 Paris (FR)**

(73) Titulaire: **AUTOMOBILES CITROEN**
**62 Boulevard Victor-Hugo**
**F-92200 Neuilly-sur-Seine (FR)**

(72) Inventeur: **Deroche, Gabriel Louis**
**3, rue Huraut**
**F-93250 Villemomble (FR)**

(74) Mandataire: **Boivin, Claude**
**9, rue Edouard-Charton**
**F-78000 Versailles (FR)**

Courier Press, Leamington Spa, England.

EP 0 255 412 B1

## Description

La présente invention concerne une suspension hydropneumatique à flexibilité variable pour véhicule automobile du type comprenant, pour chaque roue, un vérin muni d'un accumulateur hydropneumatique et, pour chaque essieu, un accumulateur hydropneumatique supplémentaire, un régulateur de raideur propre à mettre en circuit ou hors circuit cet accumulateur supplémentaire sous l'effet d'une pression hydraulique agissant à l'encontre de moyens de rappel, et un correcteur de hauteur propre à relier les vérins de suspension, suivant la charge de l'essieu, soit avec une source de liquide sous pression, soit avec l'échappement. Une suspension de ce genre est décrite par exemple dans le brevet français FR-A-2.569.624.

Il faut que le correcteur de hauteur puisse intervenir quand le régulateur met hors service l'accumulateur supplémentaire; or les moyens prévus à cet effet dans la suspension connue ne donnent pas entière satisfaction.

La présente invention a pour objet une suspension hydropneumatique dans laquelle le correcteur de hauteur fonctionne convenablement, que l'accumulateur supplémentaire soit en service ou non.

La suspension selon l'invention est caractérisée en ce que le correcteur de hauteur est relié d'une part au régulateur de raideur de façon à être ou non relié aux vérins de suspension en même temps que l'accumulateur supplémentaire, et d'autre part à un conduit auxiliaire reliant l'un à l'autre les vérins de suspension.

Quand le régulateur de raideur isole l'accumulateur supplémentaire des vérins de suspension, le correcteur de hauteur alimente de façon équilibrée ces deux vérins par l'intermédiaire du circuit auxiliaire; quand le régulateur de raideur met en service l'accumulateur supplémentaire, le correcteur de hauteur alimente de façon équilibrée les deux vérins de suspension et l'accumulateur supplémentaire.

Dans un mode de réalisation préféré de l'invention, le conduit auxiliaire comporte des moyens pour obturer la liaison entre les deux vérins de suspension si un débit de fluide tend à s'établir dans ce conduit et la suspension comporte en outre des moyens pour verrouiller en position ouverte les moyens d'obturation en cas de débit du fluide en provenance du correcteur de hauteur.

Lorsque le correcteur de hauteur est inactif et que le régulateur de raideur isole l'accumulateur supplémentaire des vérins de suspension, du liquide ne peut passer d'un vérin de suspension à l'autre, ce qui s'oppose au roulis. Cette action anti-roulis ne s'exerce pas lorsque l'accumulateur supplémentaire est en communication avec les vérins de suspension puisque ceux-ci sont de ce fait reliés l'un à l'autre. L'action anti-roulis intervient ainsi seulement lorsque la suspension est dure, ce qui est justement le cas où cette action est le plus nécessaire.

Les moyens pour obturer la liaison entre les deux vérins de suspension peuvent être constitués par une bille mobile entre deux sièges ménagés dans le conduit auxiliaire, cette bille pouvant être immobilisée entre les deux sièges par un poussoir qui est soumis à l'action d'un ressort de rappel et présente une collerette mobile avec un jeu diamétral calibré dans une chambre en communication avec le correcteur de hauteur.

Le régulateur de raideur peut comprendre un tiroir mobile dans un cylindre dont une première extrémité est en communication avec l'accumulateur supplémentaire et dont la seconde extrémité peut être reliée à une source de pression de commande de valeur supérieure à celle de la pression de cet accumulateur supplémentaire.

La seconde extrémité de ce cylindre peut contenir un joint flottant en un matériau malléable qui est écrasé par le tiroir contre le fond du cylindre, sous l'effet de la pression régnant dans l'accumulateur supplémentaire, quand la communication entre le cylindre et la source de pression de commande est interrompue. Ce joint évite les fuites et assure ainsi le maintien de la pression dans l'accumulateur supplémentaire pendant un fonctionnement de longue durée, l'accumulateur étant isolé des vérins de suspension. Comme cet accumulateur est normalement isolé des vérins, ce joint évite en outre à l'arrêt un affaissement du véhicule sur ses butées.

La liaison entre la seconde extrémité du cylindre et la source de pression de commande peut être assurée par une électro-vanne commandée par des capteurs, par exemple un capteur de la position angulaire et de la vitesse de pivotement du volant de direction, un capteur d'accélération, un capteur de décélération, un capteur de la vitesse du véhicule et un capteur de l'amplitude et de la vitesse de débattement des roues. On obtient ainsi une excellente stabilité latérale dans les virages et lors des coups de volant, une excellente stabilité longitudinale lors des accélérations et des décélérations importantes ainsi qu'une meilleure absorption des "cassis" et "dos d'âne".

On a décrit ci-après, à titre d'exemple non limitatif, un mode de réalisation de la suspension selon l'invention, avec référence aux dessins annexés dans lesquels:

La Figure 1 est une vue d'ensemble de la suspension, l'accumulateur supplémentaire étant isolé des vérins de suspension;

La Figure 2 montre un détail de la Figure 1, l'accumulateur supplémentaire étant relié aux vérins de suspension;

La Figure 3 est une vue en coupe suivant III-III de la Figure 1;

La Figure 4 est une vue en coupe suivant IV-IV de la Figure 3.

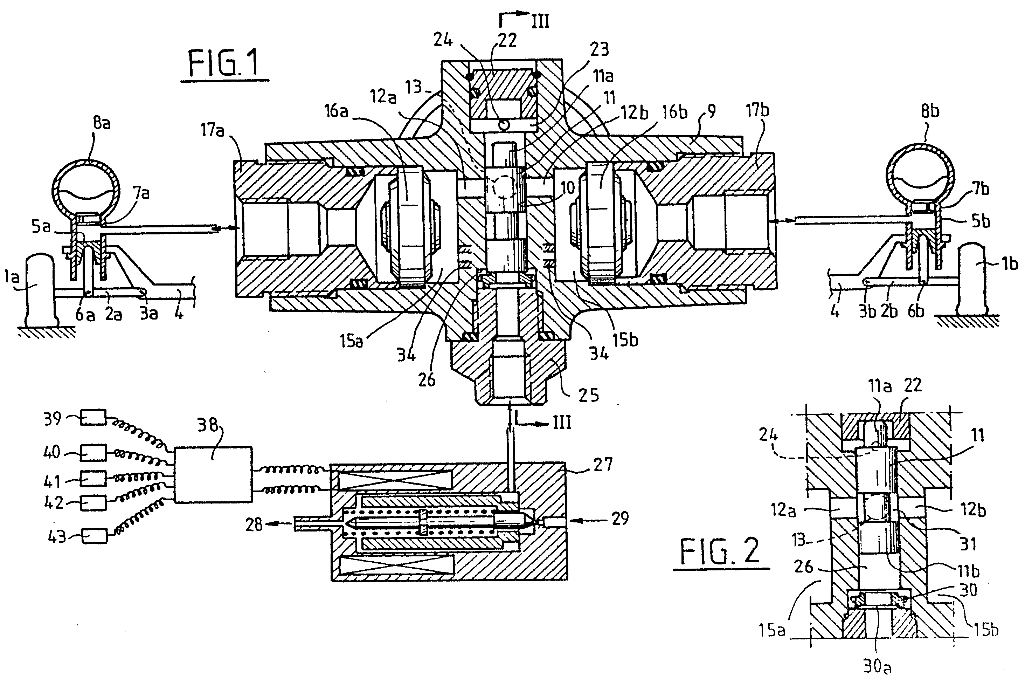

On voit à la Figure 1 un essieu comprenant une roue gauche 1a et une roue droite 1b dont chacune est portée par un bras 2a ou 2b articulé en 3a ou 3b sur une traverse 4. La suspension de l'essieu comprend deux vérins dont les pistons 5a et 5b sont articulés en 6a et 6b aux bras 2a et 2b et dont les cylindres 7a et 7b sont fixés ou articulés à la traverse 4. Les cylindres 7a et 7b sont en liaison hydraulique avec des accumulateurs hydropneumatiques 8a et 8b dont les membranes séparent des chambres à liquide et des chambres à gaz.

Les deux cylindres 7a et 7b des vérins de suspension sont reliés l'un à l'autre par un modulateur de raideur comprenant un corps 9 muni d'un perçage ou cylindre 10 dans lequel est monté coulissant un tiroir 11.

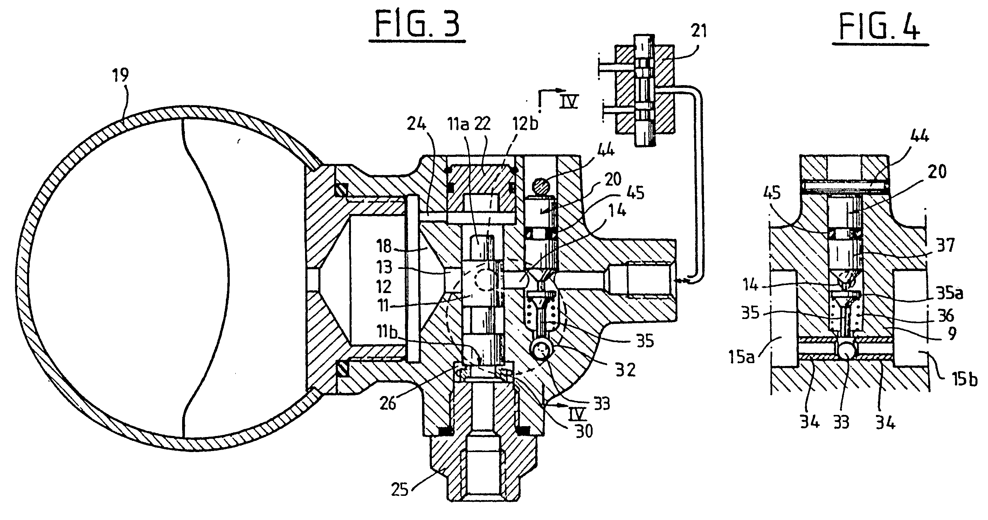

Dans le perçage 10 débouchent trois trous 12a, 12b et 13 ainsi qu'un conduit 14 ayant leurs axes situés dans un même plan perpendiculaire à l'axe du perçage 10. Le trou 12a débouche dans une cavité 15a qui est reliée par l'intermédiaire d'un dispositif d'amortissement 16a à un raccord 17a lui-même en communication avec le cylindre de suspension 7a. De son côté le trou 12b débouche dans une cavité 15b reliée de manière analogue au cylindre de suspension 7b. Le trou 13 débouche dans une chambre 18 dans laquelle est monté un accumulateur hydropneumatique supplémentaire 19 (voir Figure 3). Le conduit 14 est relié à un dispositif de correcteur de hauteur 21.

L'une des extrémités du perçage 10 est fermée par un bouchon 22. La cavité 23 qui est fermée par ce bouchon et dans laquelle se déplace l'extrémité 11a du tiroir 11, communique par un trou 24 avec la chambre 18 donc avec l'accumulateur supplémentaire 19. L'autre extrémité du perçage 10 est fermée par un raccord butée 25 et la cavité 26 comprise entre ce raccord et l'extrémité 11b du tiroir 11 peut être mise en communication par l'intermédiaire d'une électro-vanne à trois voies 27 soit avec l'échappement 28, soit avec une source de pression 29 ayant une valeur supérieure à la pression pouvant régner dans la suspension, donc dans la cavité 24. Dans la cavité 26, entre l'extrémité 11b du tiroir 11 et le raccord butée 25 est interposé un joint flottant 30, en un matériau malléable, qui assure l'étanchéité entre le tiroir et le raccord lorsque l'électro-vanne 27 est à l'échappement et que le tiroir est appliqué vers la butée par la pression de la suspension. Ce joint 30 présente, sur sa face opposée au tiroir, un évidement 30a de section au moins aussi grande que celle du tiroir pour que l'effort résultant de la pression sur la surface contenue à l'intérieur de la zone d'étanchéié de ce joint avec le raccord butée 25 compense largement l'effort résultant de la pression de suspension sur la surface opposée du tiroir afin d'assurer dans tous les cas le déplacement du tiroir malgré les frottements.

Lorsque l'électro-vanne 27 est sous tension, la cavité 26 est reliée à la source de haute pression 29 et le tiroir 11 est amené dans la position de la Figure 2, dans laquelle son extrémité 11a est en butée contre le bouchon 22. Le tiroir 11 comporte une gorge 31 qui, dans cette position, permet une totale communication entre les trous 12a, 12b et 13 et le conduit 14.

Les cavités 15a et 15b sont reliées l'une à l'autre par un perçage 32 dans lequel peut se déplacer une bille 33 et dont chacune des extrémités porte un siège 34 pour cette bille. Celle-ci empêche tout transfert de liquide entre les cavités 15a et 15b, donc entre les éléments de suspension gauche et droit, mais permet un équilibre de pression entre ces deux cavités lorsque du liquide est évacué vers le dispositif de correction de hauteur 21 ou provient de ce dispositif.

Un ressort 36 tend à appliquer un poussoir 35 sur un bouchon 30 servant de butée. Le bouchon 20 est surmonté d'une goupille 44 afin de résister à l'effort exercé par la pression hydraulique. Il est muni d'un joint torique 45 assurant l'étanchéité. Le poussoir 35 est dimensionné pour laisser un jeu diamétral calibré entre une collerette 35a du poussoir et le corps 9 afin qu'un débit compatible avec une correction de hauteur en roulant soit possible. Lors d'une admission de liquide venant du correcteur de hauteur 21, le débit dans le jeu calibré existant autour de la collerette 35a crée une perte de charge dans un effort sur le poussoir 35 suffisant pour vaincre le ressort 36 et pousser la bille 33 sur la paroi du conduit 32 en l'empêchant de se plaquer sur l'un ou l'autre des sièges 34.

L'électro-vanne 27 est commandée par un calculateur électronique 38 qui reçoit des informations d'un capteur 39 de la position angulaire et de la vitesse de pivotement du volant de direction, d'un capteur d'accélération 40, d'un capteur de décélération 41, d'un capteur 42 de la vitesse du véhicule, et d'un capteur 43 de l'amplitude et de la vitesse de débattement des roues. Le calculateur 38 analyse ces informations et commande l'électro-vanne de façon à avoir les états suivants:

1) Lorsque le véhicule est à l'arrêt et le contact coupé, quel que soit l'état des autres variables, l'électro-vanne 27 n'est pas sous tension et l'accumulateur hydropneumatique supplémentaire 19 n'est pas connecté aux vérins de suspension.

2) Lorsque le contact est mis et que la vitesse du véhicule est inférieure à un certain seuil, quel que soit l'état des autres variables, l'électrovanne 27 est sous tension et l'accumulateur 19 est connecté aux vérins.

3) Au-delà d'une certaine vitesse du véhicule, soit pour un angle du volant supérieur à une certaine valeur, soit pour une vitesse de déplacement du volant supérieure à une certaine valeur fonction de la vitesse du véhicule, soit lorsque l'accélération ou la décélération dépasse une certaine valeur, soit lorsque les roues débattent au-delà d'une certaine valeur, avec une vitesse de débattement supérieure a une valeur donnée, l'électrovanne 27 n'est pas sous tension et l'accumulateur supplémentaire 29 n'est pas connecté aux vérins de suspension.

## Revendications

1. Suspension hydropneumatique comprenant, pour chaque roue, un vérin (5a-7a ou 5b-7b) muni d'un accumulateur hydropneumatique (8a ou 8b) et, pour chaque essieu, un accumulateur hydropneumatique supplémentaire 19, un régulateur de raideur (9-11) propre à mettre en circuit ou hors circuit cet accumulateur supplémentaire (19) sous l'effet d'une pression hydraulique agissant à l'encontre de moyens de rappel, et un correcteur de hauteur (21) propre à relier les vérins de suspension, suivant la charge de l'essieu, soit avec une source de liquide sous pression, soit avec l'échappement, caractérisée en ce que le correcteur de hauteur (21) est relié d'une part au régulateur de raideur (9-11) de façon à être ou non relié aux vérins de suspension en même temps que l'accumulateur supplémentaire (19), et d'autre part à un conduit auxiliaire (32) reliant l'un à l'autre les vérins de suspension (5a-7a et 5b-7b).

2. Suspension selon la revendication 1, caractérisée en ce que le conduit auxiliaire (32) comporte des moyens (33) pour obturer la liaison entre les deux vérins de suspension si un débit de fluide tend à s'établir dans ce conduit et en ce que la suspension comporte en outre des moyens (35) pour verrouiller en position ouverte ces moyens d'obturation (33) en cas de débit de fluide en provenance du correcteur de hauteur (21).

3. Suspension selon la revendication 1 ou 2, caractérisée en ce que les moyens (33) pour obturer la liaison entre les deux vérins de suspension sont constitués par une bille mobile entre deux sièges (34) ménagés dans le conduit auxiliaire (32), cette bille pouvant être immobilisée entre les deux sièges par un poussoir (35) qui est soumis à l'action d'un ressort de rappel (36) et présente une collerette (35a) mobile avec un jeu diamétral calibré dans une chambre en communication avec le correcteur de hauteur (21).

4. Suspension selon l'une des revendications 1 à 3, caractérisée en ce que le régulateur de raideur comprend un tiroir (11) mobile dans un cylindre (10) dont une première extrémité est en communication avec l'accumulateur supplémentaire (19) et dont la seconde extrémité peut étre reliée à une source de pression de commande (29) de valeur supérieure à celle de la pression de cet accumulateur supplémentaire.

5. Suspension selon la revendication 4, caractérisée en ce que la seconde extrémité du cylindre (10) contient un joint flottant (30) en un matériau malléable qui est écrasé par le tiroir (11) contre le fond du cylindre, sous l'effet de la pression régnant dans l'accumulateur supplémentaire (19), quand la communication entre le cylindre et la source de pression de commande est interrompue.

6. Suspension selon la revendication 5, caractérisée en ce que le joint (30) comporte un évidement (30a) dans lequel la pression de commande s'applique sur une surface suffisante pour déplacer le tiroir (11).

7. Suspension selon l'une des revendications 4 à 6, caractérisée en ce que la liaison entre la seconde extrémité du cylindre (10) et la source de pression de commande (29) est assurée par une électro-vanne commandée par des capteurs, par exemple un capteur (39) de la position angulaire et de la vitesse de pivotement du volant de direction, un capteur (40) d'accélération, un capteur (41) de décélération, un capteur (42) de la vitesse du véhicule et un capteur (43) de l'amplitude et de la vitesse de débattement des roues.

## Patentansprüche

1. Hydropneumatische Aufhängung mit einem Aufhängezylinder (5a—7a oder 5b—7b) für jedes Rad, der mit einem hydropneumatischen Speicher (8a oder 8b) versehen ist und mit einem zusätzlichen hydropneumatischen Speicher (19) für jede Achse sowie einem Steifigkeitsregler (9-11) zum Einoder Ausschalten dieses zusätzlichen Speichers (19) unter der Einwirkung eines hydraulischen Druckes, der gegen Rückstellmittel wirkt, und einem Höhenausgleicher (21) zur Verbindung der Aufhängezylinder entweder mit einer Druckflüssigkeitsquelle oder mit einem Auslaß in Abhängigkeit von der Achsbelastung dadurch gekennzeichnet, daß der Höhenausgleicher (21) einerseits mit dem Steifigkeitsregler (9-11) derart verbunden ist, daß er mit den Aufhängezylindern zur gleichen Zeit wie der zusätzliche Speicher (19) verbunden oder nicht verbunden ist und andererseits mit einer Hilfsleitung (32) verbunden ist, welche die Aufhängezylinder (5a—7a und 5b—7b) miteinander verbindet.

2. Aufhängung nach Anspruch 1 dadurch gekennzeichnet, daß die Hilfsleitung (32) Mittel (33) zum Absperren der Verbindung zwischen den beiden Aufhängezylindern, wenn sich in dieser Leitung ein Flüssigkeitsstrom aufzubauen beginnt, aufweist, und daß die Aufhängung außerdem Mittel (35) zum Verriegeln dieser Absperrmittel (33) in der geöffneten position bei einem vom Höhenausgleicher (21) herkommenden Flüssigkeitsstrom aufweist.

3. Aufhängung nach Anspruch 1 oder 2 dadurch gekennzeichnet, daß die Mittel (33) zum Absperren der Verbindung zwischen den beiden Aufhängezylindern durch eine zwischen zwei in der Hilfsleitung (32) angeordneten Sitzen (34) bewegliche Kugel gebildet sind, wobei diese Kugel zwischen den beiden Sitzen durch einen Stößel (35) festgehalten werden kann, welcher der Einwirkung einer Rückholfeder (36) unterworfen ist und einen Kragen (35a) aufweist, der mit einem kalibrierten Durchmesserspiel beweglich in einer Kammer angeordnet ist, die mit dem Höhenausgleicher (21) in Verbindung steht.

4. Aufhängung nach einem der Ansprüche 1 bis 3 dadurch gekennzeichnet, daß der Steifigkeitsregler einen Steuerschieber (11) aufweist, der in einem Zylinder (10) bewegbar ist, dessen erstes Ende mit dem zusätzlichen Speicher (19) verbunden ist und dessen zweites Ende mit einer Quelle (29) für einen Betätigungsdruck verbindbar ist, dessen Wert größer ist als der Wert des Druckes in diesem zusätzlichen Speicher.

5. Aufhängung nach Anspruch 4 dadurch gekennzeichnet, daß das zweite Ende des Zylinders (10) eine schwimmende Dichtung (30) aus verformbarem Material enthält, die von dem Steuerschieber (11) unter der Wirkung des im zusätzlichen Speicher (19) herrschenden Druckes flach auf den Grund des Zylinders gedrückt wird, wenn die Verbindung zwischen dem Zylinder und der Quelle für den Betätigungsdruck unterbrochen ist.

6. Aufhängung nach Anspruch 5 dadurch gekennzeichnet, daß die Dichtung (30) eine Ausnehmung (30a) aufweist, in welcher der Betätigungsdruck auf eine Oberfläche einwirkt, die ausreicht, um den Steuerschieber (11) zu verschieben.

7. Aufhängung nach einem der Ansprüche 4 bis 6 dadurch gekennzeichnet, daß die Verbindung zwischen dem zweiten Ende des Zylinders (10) und der Quelle (29) für den Betätigungsdruck über ein Magnetventil bewirkt wird, das durch Sensoren angesteuert wird, beispielsweise einen Sensor (39) für die Winkelposition und die Drehgeschwindigkeit des Lenkrades, einen Sensor (40) für die Beschleunigung, einen Sensor (41) für die Verzögerung, einen Sensor (42) für die Fahrzeuggeschwindigkeit und einen Sensor (43) für die Amplitude und die Geschwindigkeit des Ausfederns der Räder.

**Claims**

1. Hydropneumatic suspension comprising, for each wheel, a jack (5a-7a or 5b-7b) having a hydropneumatic accumulator (8a or 8b) and, for each axle, an additional hydropneumatic accumulator (19), a stiffness regulator (9-11) adapted for placing this additional accumulator (19) in or out of circuit under the effect of a hydraulic pressure acting against return means, and a height corrector (21) adapted for connecting the suspension jacks, depending on the axle load, either with a pressurized liquid source or with the outlet, characterized in that the height corrector (21) is connected both to the stiffness regulator (9-11) so as to be connected or not to the suspension jacks at the same time as the additional accumulator (19) and to an auxiliary duct (32) connecting the suspension jacks (5a-7a and 5b-7b) together.

2. Suspension according to claim 1, characterized in that the auxiliary duct (32) comprises means (33) for closing the connection between the two suspension jacks if a fluid flow tends to be established in this duct and in that the suspension further comprises means (35) for locking the closure means (33) in an open position in the case of a flow of fluid from the height corrector (21).

3. Suspension according to claim 1 or 2, characterized in that the means for closing the connection between the two suspension jacks are formed by a ball movable between two seats (34) formed in the auxiliary duct (32), this ball being immobilized between the two seats by a pusher (35) which is subjected to the action of a return spring (36) and has a collar (35a) movable with a calibrated diametrical clearance in a chamber in communication with the height corrector (21).

4. Suspension according to one of claims 1 to 3, characterized in that the stiffness regulator comprises a slide valve (11) movable in a cylinder (10), a first end of which is in communication with the additional accumulator (19) and the second end of which may be connected to a control pressure source (29) of a value higher than that of the pressure of this additional accumulator.

5. Suspension according to claim 4, characterized in that the second end of the cylinder (10) contains a floating seal (30) made from a malleable material which is crushed by the slide valve (11) against the bottom of the cylinder, under the effect of the pressure prevailing in the additional accumulator (10) when communication between the cylinder and control pressure source is interrupted.

6. Suspension according to claim 5, characterized in that the seal (30) comprises a recess (30a) in which the control pressure is applied on a sufficient surface for moving the slide valve (11).

7. Suspension according to one of claims 4 to 6, characterized in that the connection between the second end of the cylinder (10) and the control pressure source (29) is provided by an electrovalve controlled by sensors, for example a sensor (39) detecting the angular position and the speed of rotation of the steering wheel, an acceleration sensor (40), a deceleration sensor (41), a sensor (42) detecting the speed of the vehicle and a sensor (43) detecting the amplitude and the rate of deflection of the wheels.

FIG.1

FIG.2

EP 0 255 412 B1

FIG. 3

FIG. 4

EP 0 255 412 B1